# EUROPEAN PATENT SPECIFICATION

(11) **EP 1 408 245 B1**
(45) Date of publication and mention of the grant of the patent: **14.02.2007**
(21) Application number: 03021194.0
(22) Date of filing: 24.09.2003
(51) Int. Cl.: F16B 35/04, B21H 3/02

(54) **A bolt and a die**
Bolzen und Walzbacken
Un Boulon et une matrice

(30) Priority: 27.09.2002 JP 2002320542
(43) Date of publication of application: 14.04.2004
(73) Proprietor: Meidoh Co., Ltd., Toyota-shi, Aichi (JP)
(72) Inventor: Kato, Takashi, Toyota-shi Aichi (JP)
(74) Representative: Vossius & Partner

(56) References cited:
- EP-A- 1 205 675

## Description

The present invention relates to a bolt wherein oblique screwing of said bolt into a nut is prevented and a die used to manufacture said bolt.

It is known that gouging and seizure are caused by the oblique screwing of a bolt into a nut. To prevent said oblique screwing, an improved bolt (2P) having a guide boss (6) as shown in Fig.4 has been provided. Said bolt (2P) consists of a head portion (11), and a shank potion (44) on which a thread part (22A) is formed (a threaded shank portion), and a guide boss (6) which extends from the end of said shank potion (44), and the external diameter (DP) of said guide boss (6) is settled to be a little smaller than the internal diameter (DN) of a nut (5) into which said bolt (2P) is to be screwed.

By using said bolt (2P), when said bolt (2P) is screwed into said nut (5), first said guide boss (6) having the external diameter (DP) being a little smaller than the internal diameter (DN) of said nut (5) is inserted into said nut so that the oblique screwing of said bolt into said nut can be corrected to a certain extent.

Nevertheless, since a little play exists between said guide boss (6) of said bolt (2P) and the tapped hole (55) of said nut (5), said oblique screwing of said bolt (2P) into said nut (5) can not be completely corrected and the problems of gouging and seizure caused by the gap between the incomplete thread part (52) at the entrance of said nut (5) and the incomplete thread part (72) of said bolt (2P) are still not solved. Further, said bolt (2P) can not be applied to an area having no space in which said guide boss of said bolt jutting out from said nut is received.

EP-A-1 205 675 relates to a bolt having a threaded shank portion wherein a notch slanting toward the end of said threaded shank portion at an angle in the range between 15° to 80° toward the axis of said threaded shank portion is formed at the beginning of the complete thread part.

Accordingly, an object of the present invention is to provide a bolt which can effectively prevent gouging and seizure caused by the oblique screwing of a bolt into a nut.

As a means to solve said problem, the present invention provides a bolt having a threaded shank portion (4) with all the features referred to in claim 1.

A slide face (333) along the ridge of the thread (L) is desirably formed across said inflection point (33), and the inner side (31) of said notched face (3) from said inflection point (33) desirably slants at an angle ranging from -5° to -30° toward the axis of said threaded shank portion, and the beginning end side (32) of said notched face (3) from said inflection point (33) desirably slants at an angle ranging from +135° to +170° toward the axis of said threaded shank portion (4).

Said bolts (1P) (3P) of the present invention are manufactured with a die (8) having a forming part of said notched face (3) formed at the beginning of the thread part of said threaded shank portion (4) of said bolt, said forming part having an inflection point corresponding to said inflection point (33) of said notched face (3).

In the case of manufacturing said bolt (3P), a die (8) wherein a slide face forming part (333) is formed across said inflection point (33) is used.
Fig.1 is a front view of the bolt of the present invention.
Fig.2 is a right side view of the bolt of the present invention.

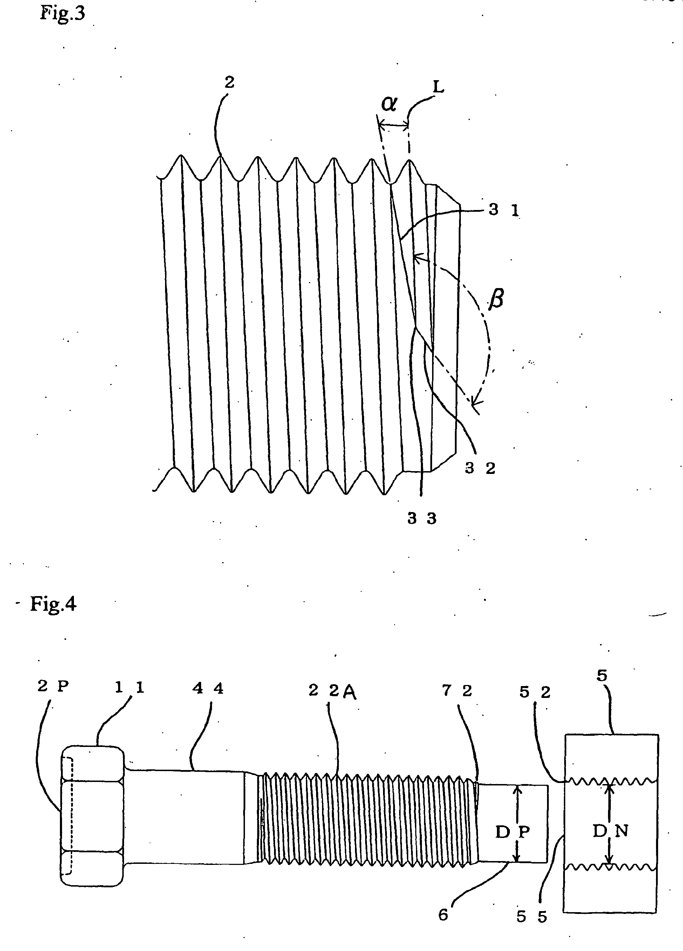

Fig.3 is an enlarged front view of the end part of the bolt of the present invention.
Fig.4 is a side view of the conventional bolt having a guide boss.
Fig.5 is an enlarged front view of a combination of the bolt of the present invention and a standard nut.
Fig.6 is a front view of the die with which the bolt of the present invention is manufactured.

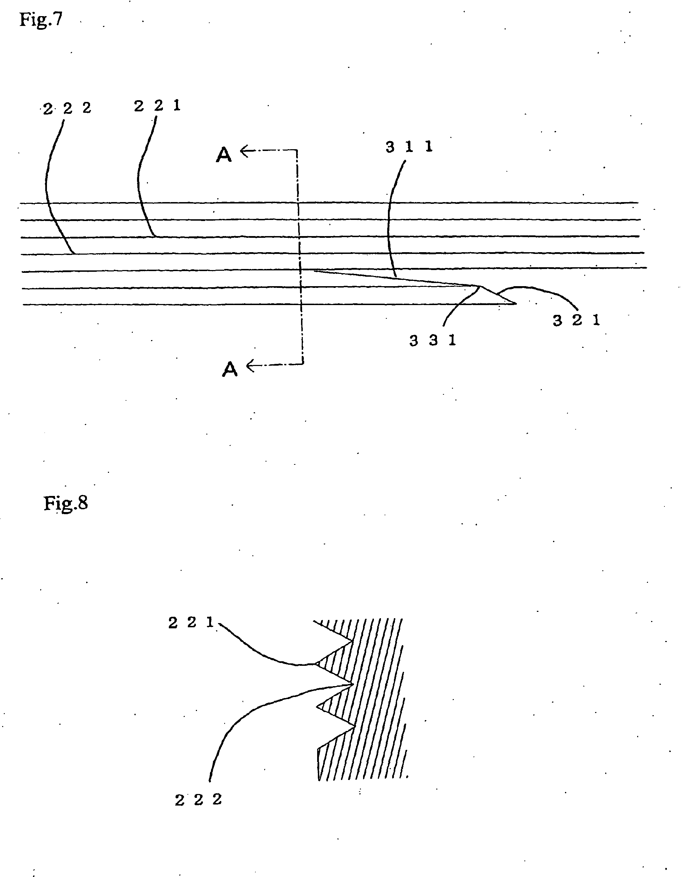

Fig.7 is an enlarged front view of inflection point at part B.
Fig.8 is an enlarged cross-sectional view cut along line A-A in Fig. 7 showing a thread forming section 221 and a root forming section 222.
Fig.9 is a front view of the bolt wherein the slide face of the present invention is formed.
Fig. 10 is an enlarged front view of the end part of the bolt wherein the slide face of the present invention is formed.

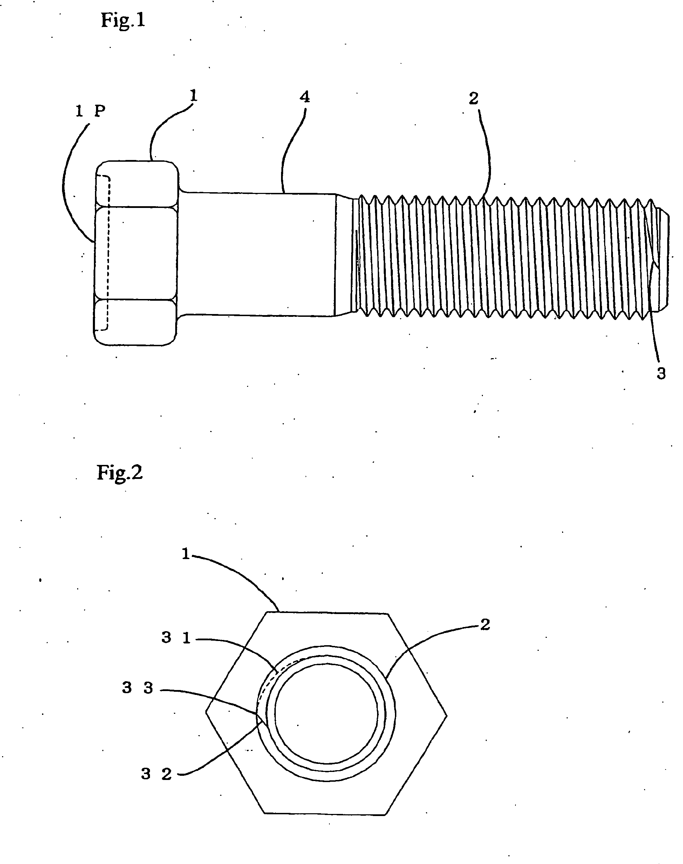

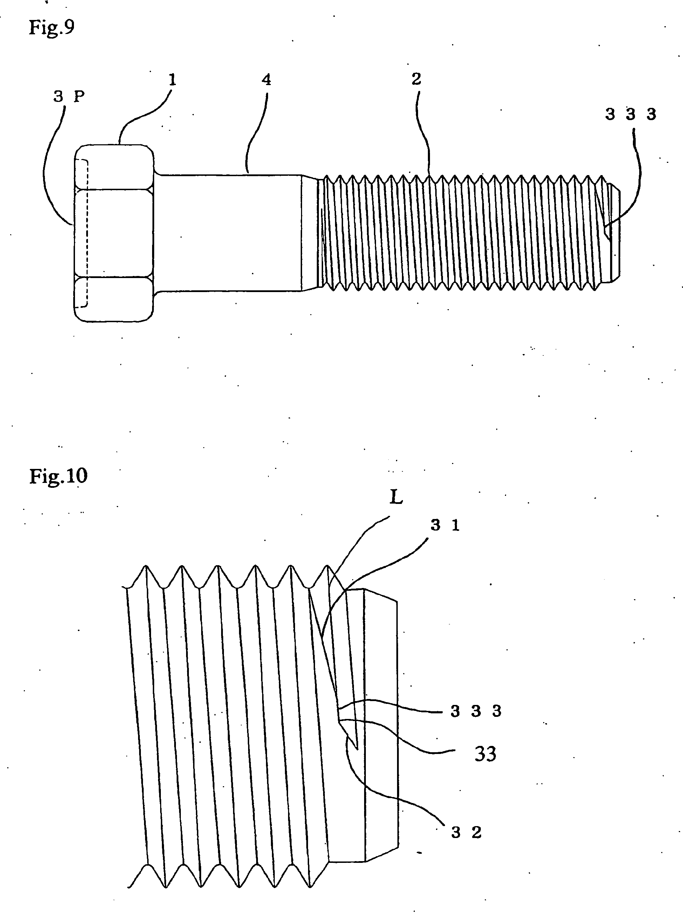

Embodiments of bolts of the present invention are shown in Fig.1 and Fig.9. The bolt (1P) shown in Fig.1 consists of a hexagonal head portion (1) and a shank portion (4) on which a threaded part (2) is formed (a threaded shank portion (4)). A notched face (3) slanting toward the end of said threaded shank portion (4) is formed at the beginning of the complete thread of said threaded part (2).
Said notched face (3) has an inflection point (33) at the position where said notched face (3) crosses the ridge of the thread and the inner side (31) (the head portion side) of said notched face (3) from said inflection point (33) slants at a negative angle (α) ranging from -5° to -30°, desirably -10° toward the axis of said threaded shank portion (4) (lead direction of said bolt (1P)), and the beginning end side (32) of said notched face (3) from said inflection point (33) slants at a positive angle (β) ranging from +135° to +170°, desirably +150° toward the axis of said threaded shank portion (4) (lead direction of said bolt (1P)).

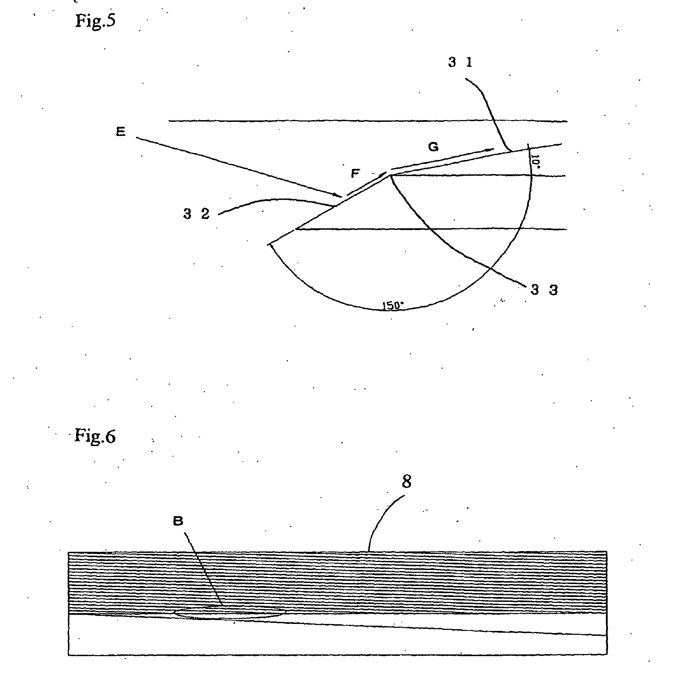

Said bolt (1P) is manufactured by rolling with a thread rolling die as shown in Fig.6. Said die has a forming part of said notched face formed at the beginning the thread part of said threaded shank portion of said bolt to be manufactured, and said forming part consists of a forming part (311) of the inner side of said notched face from said inflection point (331) and a forming part (321) of the beginning end side of said notched face from said inflection point (331), and said forming part (311) is manufactured by electric spark processing, press molding, or cutting.
Since said bolt (1P) manufactured as above has a notched face (3) having an inflection point (33) at the position where said notched face (3) crosses the ridge of the thread, said inflection point (33) has the same height as that of said complete thread and the beginning end side (32) from said inflection point (33) slants at +150° toward the axis of said threaded shank portion (4) as shown in Fig.5, if said bolt (1P) is obliquely screwed into the incomplete thread part (52) of a nut (5) (E), said incomplete thread part (52) at the entrance of said nut (5) slides along line (F=sliding growing position) to reach said inflection point (33), and since the inner side (31) of said notched face (3) from said inflection point (33) slants at -10° toward the axis of said threaded shank portion (4), where said incomplete thread part (52) at the entrance of said nut (5) goes beyond said inflection point (33), the sliding friction of said incomplete thread part (52) at the entrance of said nut (5) is reduced to correct the oblique screwing of said bolt (1P) with the sliding power increasing position G.

When said incomplete thread part (52) at the entrance gets over said beginning end side (32) of said notched face (3) from said inflection point (33), said bolt (1P) races in said nut (5) but when the worker screws said bolt (1P) into said nut (5) again adjusting screwing angle of said bolt (1P), said bolt (1P) is normally screwed into said nut (5) to prevent effectively gouging and seizure between said bolt (1P) and said nut (5). In a case where the classification of the mechanical strength of the bolt is higher than 10.9, it is preferable to form a slide face forming part (333) by expanding said inflection point along the ridge of the thread as shown in Fig.9.

The present invention is not limited to said embodiments as shown in Figures and various kinds of alterations and modifications can be done in the present invention without deviation from the spirit of the present invention.

For instance, the shape of the head portion of the bolt may be cylindrical as well as hexagonal, and a flange may be formed at the lower end of said head portion. Still further, in a case where the space in which the end part of the threaded shank portion of the bolt jutting out from the nut can be received exists in the fastening part, a guide boss is preferably extended from the end of the threaded shank portion of the bolt, said guide boss has the effect of preventing gouging and seizure.

By using said bolt of the present invention, gouging and seizure between the bolt and the nut are effectively prevented and said bolt can even be used in a case where there is no space to receive the end part of the threaded shank portion of the bolt jutting out from the nut, and further a rotary die can be used as well as a flat die to manufacture the bolt.

## Claims

1. A bolt (1P, 3P) having a threaded shank portion (4) with a notched face (3) comprising an inflection point (33) at a position where said notched face (3) crosses the ridge of a thread (L), said notched face (3) comprising:
a beginning side edge (32) arranged in the beginning side of the threaded shank portion (4) and slanting from the inflection point (33) at a positive angle toward the axis of the threaded shank portion (4) to the beginning of the threaded shank portion (4) and
an inner side edge (31) slanting from the inflection point (33) at a negative angle toward the axis of the threaded shank portion(4).

2. A bolt (1P, 3P) according to claim 1, wherein a slide face (333) is formed along the ridge of the thread (L) across said inflection point (33).

3. A bolt (1P, 3P) according to claim 1 or 2, wherein the inner side edge (31) of said notched face (3) slants from said inflection point (33) at an angle ranging from -5° to -30° toward the axis of said thread shank portion (4) and the beginning side edge (32) of said notched face (3) slants from said inflection point (33) at an angle ranging from +135° to +170° toward the axis of said threaded shank portion (4).

4. A die (8) for manufacturing said bolt (1P, 3P) according to any of claims 1 to 3, having a forming part of said notched face (3) formed at the beginning of the thread part (2) of said threaded shank portion (4) of said bolt (1P, 3P), said forming part having an inflection point corresponding to said inflection point (33) of said notched face (3).

5. A die (8) according to claim 4, wherein the slide face forming part is formed by expanding said inflection point (33) along the ridge of the thread (L).

## Patentansprüche

1. Bolzen (1P, 3P) mit einem Gewindeschaftabschnitt (4) mit einer gekerbten Fläche (3) mit einem Wendepunkt (33) an einer Position, wo die gekerbte Fläche (3) die Rippe eines Gewindes (L) kreuzt, wobei die gekerbte Fläche (3) aufweist:
eine beginnende Seitenkante (32), die an der Anfangsseite des Gewindeschaftabschnitts (4) angeordnet ist und die sich vom Wendepunkt (33) in einem positiven Winkel zur Richtung der Achse des Gewindeschaftabschnitts (4) bis zum Anfang des Gewindeschaftabschnitts (4) neigt, und
eine Innenseitenkante (31), die sich vom Wendepunkt (33) in einem negativen Winkel zur Richtung der Achse des Gewindeschaftabschnitts (4) neigt.

2. Bolzen (1P, 3P) nach Anspruch 1, wobei eine Gleitfläche (333) entlang der Rippe des Gewindes (L) über den Wendepunkt (33) hinweg ausgebildet ist.

3. Bolzen (1P, 3P) nach Anspruch 1 oder 2, wobei die Innenseitenkante (31) der gekerbten Fläche (3) sich von dem Wendepunkt (33) in einem Winkel, der von -5° bis -30° reicht, zur Richtung der Achse des Gewindeschaftabschnitts (4) neigt und die beginnende Seitenkante (32) der gekerbten Fläche (3) sich von dem Wendepunkt (33) in einem Winkel, der von +135° bis +170° reicht, zur Richtung der Achse des Gewindeschaftabschnitts (4) neigt.

4. Gewindebacke (8) zur Herstellung des Bolzens (1P, 3P) nach einem der Ansprüche 1 bis 3, mit einem Formteil für die am Anfang des Gewindeteils (2) des Gewindeschaftabschnitts (4) des Bolzens (1P, 3P) ausgebildete gekerbte Fläche (3), wobei das Formteil einen Wendepunkt hat, der dem Wendepunkt (33) der gekerbten Fläche (3) entspricht.

5. Gewindebacke (8) nach Anspruch 4, wobei der gleitflächenbildende Teil durch Ausdehnung des Wendepunkts (33) entlang der Rippe des Gewindes (L) ausgebildet wird.

## Revendications

1. Boulon (1P, 3P) ayant une partie de tige filetée (4) avec une face à encoche (3) comprenant un point d'inflexion (33) à une position où ladite face à encoche (3) croise la saillie d'un filet (L), ladite face à encoche (3) comprenant :
un bord latéral de départ (32) placé dans le côté de départ de la partie de tige filetée (4), et incliné à partir du point d'inflexion (33) d'un angle positif vers l'axe de la partie de tige filetée (4) au début de la partie de tige filetée (4) et
un bord latéral interne (31) incliné à partir du point d'inflexion (33) d'un angle négatif vers l'axe de la partie de tige filetée (4).

2. Boulon (1P, 3P) selon la revendication 1, dans lequel une face de coulissement (333) est formée le long de la saillie du filet (L) en travers dudit point d'inflexion (33).

3. Boulon (1P, 3P) selon la revendication 1 ou 2, dans lequel le bord latéral interne (31) de ladite face à encoche (3) est incliné à partir dudit point d'inflexion (33) d'un angle allant de -5 ° à -30 ° vers l'axe de ladite partie de tige filetée (4) et le bord latéral de départ (32) de ladite face à encoche (3) est incliné à partir dudit point d'inflexion (33) d'un angle allant de +135 ° à +170 ° vers l'axe de ladite partie de tige filetée (4).

4. Matrice (8) destinée à fabriquer ledit boulon (1P, 3P) selon l'une quelconque des revendications 1 à 3, ayant une partie constituante de ladite face à encoche (3) formée au début de la partie filetée (2) de ladite partie de tige filetée (4) dudit boulon (1P, 3P), ladite partie constituante ayant un point d'inflexion correspondant au dit point d'inflexion (33) de ladite face à encoche (3).

5. Matrice (8) selon la revendication 4, dans laquelle la partie constituante de la face de coulissement est formée en développant ledit point d'inflexion (33) le long de la saillie du filet (L).
